# EUROPEAN PATENT APPLICATION

(11) **EP 4 071 188 A1**
(43) Date of publication of application: **12.10.2022**
(21) Application number: 20895081.6
(22) Date of filing: 03.12.2020
(51) Int. Cl.: C08F 290/06, C08F 299/00, C08F 2/48, B33Y 80/00, B29C 64/106, B29C 64/264, B33Y 70/00

(54) **RESIN COMPOSITION AND RESIN CURED PRODUCT**

(30) Priority: 06.12.2019 JP 2019221477
(71) Applicant: AGC INC., Chiyoda-ku, Tokyo 1008405 (JP)
(72) Inventor: NAKAMURA, Makito, Tokyo 100-8405 (JP); SUZUKI, Chitoshi, Tokyo 100-8405 (JP); SASAKI, Takayuki, Tokyo 100-8405 (JP); MISHRA, Nikhil, Tokyo 100-8405 (JP)
(74) Representative: Müller-Boré & Partner Patentanwälte PartG mbB
(86) International application number: PCT/JP2020/045096
(87) International publication number: WO 2021/112192

(57) **Abstract**

Provided are a resin composition with low viscosity and a resin cured product. The resin composition comprises a first monomer and a second monomer, wherein the proportion of the first monomer with respect to the total mass of the first monomer and the second monomer is 50 to 98% by mass, and the resin cured product is of the resin composition.

## Description

### Technical Field

The present invention relates to a resin composition and a resin cured product.

### Background Art

In recent years, there has been growing attention on a method of using photocurable resin compositions to perform three dimensional photofabrication based on data input into three-dimensional CAD.

As the stereolithographic technology, a stereolithographic method has been known that is characterized by repeating a step in which light energy is supplied to a photocurable resin composition to cure it into the form of a thin layer, another photocurable resin composition is supplied on top of it, and then light irradiation is performed to laminate and cure it into the form of a thin layer.
The stereolithographic method has attracted a great deal of attention in recent years because it can easily produce the targeted three-dimensional fabricated object in a relatively short time, even if the shape of the fabricated object is complicated.

For photocurable resin compositions used in the stereolithographic method, it is required that they have low viscosity and excellent handling properties during photofabrication, and that they have high cure sensitivity to active energy rays and can produce three dimensional fabricated objects with a short light irradiation time.

As the photocurable resin compositions used in the stereolithographic method, those mainly composed of photopolymerizable compounds such as photopolymerizable modified urethane (meth)acrylate-based compounds, oligoester acrylate-based compounds, epoxy acrylate-based compounds, epoxybased compounds, polyimide-based compounds, amino alkyl based compounds, and vinyl ether based compounds have been used.

Patent Literature 1 describes a resin composition containing a urethanized acrylic compound, a radical polymerizable compound, and a photopolymerization initiator, wherein the mass ratio of the above acrylic urethane compound and the above radical polymerizable compound is 80:20 to 10:90 (CLAIMS).

### Citation List

### Patent Literature

PTL 1: JP 09-169827 A

### Summary of Invention

### Technical Problem

In order to improve the handling properties and fabrication accuracy of resin compositions, resin compositions with low viscosity have been demanded.
However, according to investigations by the present inventors, the viscosity of the resin composition described in Patent Literature 1 is not sufficiently low, and there is a need for a resin composition with lower viscosity.

The present invention addresses a problem of providing a resin composition with low viscosity that is excellent in modelability of cured products and a resin cured product.

### Solution to Problem

[1] A resin composition comprising a first monomer and a second monomer, wherein
   the first monomer is at least one monomer selected from the group consisting of reaction products of (i), (ii), and (iii) below,
   the second monomer is at least one monomer selected from the group consisting of reaction products of (iv) and (v) below, and
   the proportion of the first monomer with respect to the total mass of the first monomer and the second monomer is 50 to 98% by mass:
      (i) an equimolar reaction product of a polyether monool and a compound having a (meth)acryloyloxy group, where the compound having a (meth)acryloyloxy group is a compound having one isocyanate group in a molecule and having one or two (meth)acryloyloxy groups in a molecule;
      (ii) an equimolar reaction product of a polyether monool, a diisocyanate, and a compound having a (meth)acryloyloxy group, where the compound having a (meth)acryloyloxy group is a compound having one group that reacts with an isocyanate group in a molecule and having one or two (meth)acryloyloxy groups in a molecule;
      (iii) an equimolar reaction product of a polyether polyol and a compound having a (meth)acryloyloxy group, where the compound having a (meth)acryloyloxy group is a compound having one isocyanate group in a molecule and having one or two (meth)acryloyloxy groups in a molecule;
      (iv) a reaction product of a polyether polyol and a compound having a (meth)acryloyloxy group, where the compound having a (meth)acryloyloxy group is a compound having one isocyanate group in a molecule and having one or two (meth)acryloyloxy groups in a molecule, and the hydroxyl group in the polyether polyol and the compound having a (meth)acryloyloxy group are equimolar; and
      (v) a reaction product of a polyol (A), a polyisocyanate, and a compound having a (meth)acryloyloxy group, where the polyol (A) is at least one or more selected from the group consisting of a polyether polyol, a polyester polyol, a poly(meth)acrylic polyol, a polycarbonate polyol, a castor oil based polyol, and a polyolefin polyol, the compound having a (meth)acryloyloxy group is a compound having one group that reacts with an isocyanate group in a molecule and having one or two (meth)acryloyloxy groups in a molecule, and the total number of moles of the hydroxyl group of the polyol (A) and the group that reacts with an isocyanate group of the compound having a (meth)acryloyloxy group is equal to the number of moles of the isocyanate group of the polyisocyanate.
[2] The resin composition according to [1], wherein the first monomer comprises at least the reaction product of (i).
[3] The resin composition according to [1], wherein the first monomer is at least one selected from the group consisting of a compound represented by formula (1), a compound represented by formula (2), and a compound represented by formula (3): 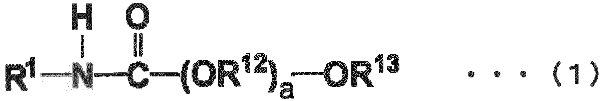 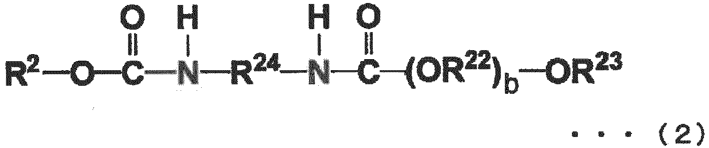 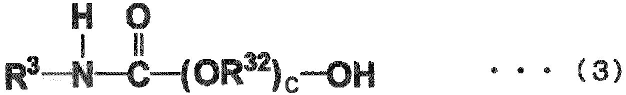
   wherein, in formula (1), R¹ is a monovalent organic group having one or two (meth)acryloyloxy groups, R¹² is an alkylene group having 2 to 8 carbon atoms, R¹³ is an alkyl group having 1 to 20 carbon atoms, and a is an integer of 20 to 600;
   wherein, in formula (2), R² is a monovalent organic group having one or two (meth)acryloyloxy groups, R²² is an alkylene group having 2 to 8 carbon atoms, R²³ is an alkyl group having 1 to 20 carbon atoms, R²⁴ is a divalent group formed by removing two isocyanate groups from a diisocyanate, and b is an integer of 20 to 600; and
   wherein, in formula (3), R³ is a monovalent organic group having one or two (meth)acryloyloxy groups, R³² is an alkylene group having 2 to 8 carbon atoms, and c is an integer of 20 to 600.
[4] The resin composition according to [3], wherein the first monomer is a compound represented by the above formula (1).
[5] The resin composition according to any one of [1] to [4], wherein the second monomer is at least one selected from the group consisting of a compound represented by formula (4) and a compound represented by formula (5): 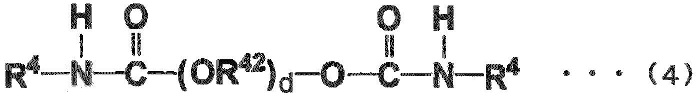 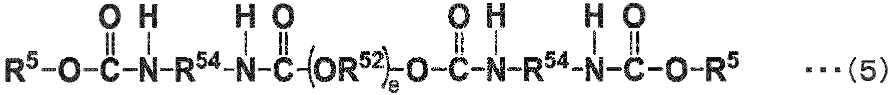
   wherein, in formula (4), R⁴ is a monovalent organic group having one or two (meth)acryloyloxy groups, R⁴² is an alkylene group having 2 to 8 carbon atoms, and d is an integer of 20 to 600; and
   wherein, in formula (5), R⁵ is a monovalent organic group having one or two (meth)acryloyloxy groups, R⁵² is an alkylene group having 2 to 8 carbon atoms, R⁵⁴ is a divalent group formed by removing two isocyanate groups from a diisocyanate, and e is an integer of 20 to 600.
[6] The resin composition according to any one of [1] to [5], having a viscosity at 25°C of 30 Pa·s or less.
[7] The resin composition according to any one of [1] to [6], having a glass transition temperature of -75 to -50°C.
[8] The resin composition according to any one of [1] to [7], wherein the first monomer has a number average molecular weight of 3,000 to 30,000.
[9] The resin composition according to any one of [1] to [8], wherein the second monomer has a number average molecular weight of 6,000 to 60,000.
[10] The resin composition according to any one of [1] to [9], further comprising a third monomer having a (meth)acryloyloxy group.
[11] The resin composition according to any one of [1] to [10], being a fabricating material for 3D printers.
[12] The resin composition according to any one of [1] to [11], further comprising a photoradical polymerization initiator.
[13] The resin composition according to [12], being a photocurable resin composition for 3D printers.
[14] A resin cured product obtained by irradiating the resin composition according to [13] with light.
[15] The resin cured product according to [14], being an artificial organ or an organ model.

### Advantageous Effects of Invention

According to the present invention, a resin composition with low viscosity that is excellent in modelability of cured products and a resin cured product can be provided.

### Description of Embodiments

The term "(meth)acryloyloxy group" is a generic term for acryloyloxy group and methacryloyloxy group.

The term "(meth)acrylate" is a generic term for acrylate and methacrylate.

The term "index" in the reaction of an isocyanate group containing compound and a hydroxyl group containing compound is the value obtained by dividing the number of moles of isocyanate groups from the compound containing isocyanate group by the number of moles of hydroxyl groups from the compound containing hydroxyl group and multiplying the resulting value by 100.

The hydroxyl value from a compound containing hydroxyl group is obtained by measurement in accordance with JIS K 1557:2007. Also, the molecular weight in terms of hydroxyl value is the value calculated by applying the hydroxyl value to the formula "56,100/ (hydroxyl value) × (number of active hydrogens in the initiator)".

The number average molecular weight is the molecular weight in terms of polystyrene obtained by measurement by gel permeation chromatography (GPC) using a calibration curve created using a standard polystyrene sample with a known molecular weight. The molecular weight distribution refers to the value obtained by dividing the mass average molecular weight (molecular weight in terms of polystyrene obtained by GPC as in the case of number average molecular weight) by the number average molecular weight. Note that, when peaks of unreacted low molecular weight components (monomer and the like) appear in the GPC measurement, the number average molecular weight is determined excluding these peaks.

The number average molecular weight of a compound with no molecular weight distribution shall be able to be substituted by the molecular weight represented by the formula weight obtained based on the chemical formula.

### [Resin Composition]

A resin composition of the present invention comprises a first monomer to be mentioned later and a second monomer to be mentioned later.

### <First Monomer>

The above first monomer is at least one selected from the group consisting of a reaction product of (i) below (hereinafter, may be referred to as "monomer 1-1"), a reaction product of (ii) below (hereinafter, may be referred to as "monomer 1-2"), and a reaction product of (iii) below (hereinafter, may be referred to as "monomer 1-3"):
(i) an equimolar reaction product of a polyether monool and a compound having a (meth)acryloyloxy group, where the compound having a (meth)acryloyloxy group is a compound having one isocyanate group in a molecule and having one or two (meth)acryloyloxy groups in a molecule;
(ii) an equimolar reaction product of a polyether monool, a diisocyanate, and a compound having a (meth)acryloyloxy group, where the compound having a (meth)acryloyloxy group is a compound having one group that reacts with an isocyanate group in a molecule and having one or two (meth)acryloyloxy groups in a molecule; and
(iii) an equimolar reaction product of a polyether polyol and a compound having a (meth)acryloyloxy group, where the compound having a (meth)acryloyloxy group is a compound having one isocyanate group in a molecule and having one or two (meth)acryloyloxy groups in a molecule.

It is preferable that the above first monomer comprises at least the reaction product of (i) since the viscosity of the resulting curable composition tends to be lower and the cure shrinkage factor in the cured product tends to be even lower.

The number average molecular weight of the above first monomer is preferably 3,000 to 30,000, more preferably 4,000 to 20,000, and still more preferably 5,000 to 17,000. When the above number average molecular weight is 3,000 or more, the hardness of the resin cured product becomes even lower, and when it is 30,000 or less, the viscosity becomes even lower.

### <<Monomer 1-1 (Reaction Product of (i))>>

As the monomer 1-1, a compound represented by formula (1) is preferred.

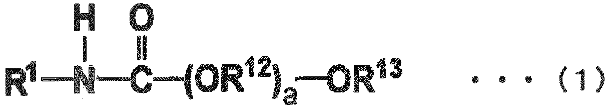

In formula (1):
R¹ is a monovalent organic group having one or two (meth)acryloyloxy groups; and
R¹² is an alkylene group having 2 to 8 carbon atoms, preferably an alkylene group having 2 to 4 carbon atoms. Multiple R¹² present in a molecule may be same or different from each other. When two or more kinds of R¹² are present in a molecule, the linkage of -OR¹²- may be either block or random. R¹² is preferably at least one selected from the group consisting of an ethylene group, a propylene group, a 1,2-dimethylethylene group, and a 1-ethylethylene group, and is more preferably one or two selected from the group consisting of an ethylene group and a propylene group.

Also, (OR¹²) is preferably a unit based on monomer a having one epoxy group and an ether bond other than the ether bond of the epoxy group in a molecule. The unit based on monomer a is preferably a unit represented by formula (11). One kind of monomer a may be used, or two or more kinds thereof may be used in combination.

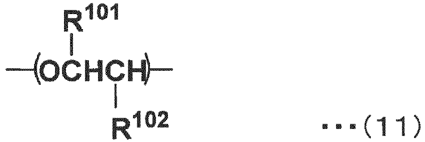

In formula (11), R¹⁰¹ is a monovalent group represented by -R¹⁰³-O-R¹⁰⁴, R¹⁰² is a hydrogen atom, or a monovalent group represented by -R¹⁰⁵-O-R¹⁰⁶, R¹⁰³ and R¹⁰⁵ are each independently a linear or branched alkylene group having 1 to 3 carbon atoms, and R¹⁰⁴ and R¹⁰⁶ are each independently a linear or branched alkyl group having 1 to 18 carbon atoms. R¹⁰¹ and R¹⁰² may be the same as or different from each other.

The alkylene groups of R¹⁰³ and R¹⁰⁵ are, each independently, preferably a methylene group, an ethylene group, a n-propylene group, or an isopropylene group, more preferably a methylene group or an ethylene group, and still more preferably a methylene group.

The numbers of carbon atoms in R¹⁰⁴ and R¹⁰⁶ are, each independently, preferably 1 to 14, more preferably 1 to 12, and still more preferably 2 to 10.

When R¹⁰⁴ and R¹⁰⁶ are linear alkyl groups, examples thereof may include a methyl group, an ethyl group, a n-propyl group, a n-butyl group, a n-octyl group, a n-decyl group, a lauryl group, a cetyl group, and a stearyl group, and a methyl group, an ethyl group, and a n-butyl group are preferred. When R¹⁰⁴ and R¹⁰⁶ are branched alkyl groups, they have a structure in which a hydrogen atom (but not the hydrogen atoms bonded to the terminal carbon) in the linear alkyl group is substituted with an alkyl group. Examples of the substituting alkyl group may include a methyl group and an ethyl group. As the branched alkyl group, a 2-ethylhexyl group is preferred.

As the monomer a, a monomer represented by formula (12) is preferred.

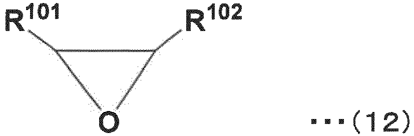

R¹⁰¹ and R¹⁰² in formula (12) are the same as R¹⁰¹ and R¹⁰² in formula (11).

Examples of the monomer represented by formula (12) include methyl glycidyl ether, butyl glycidyl ether, 2-ethylhexyl glycidyl ether, lauryl glycidyl ether, and hexyl glycidyl ether, and from the point that the flexibility of the cured product of the resulting resin composition is even better, butyl glycidyl ether and 2-ethylhexyl glycidyl ether are preferred.

R¹³ is an alkyl group having 1 to 20 carbon atoms, preferably an alkyl group having 1 to 8 carbon atoms, more preferably a methyl group, an ethyl group, or a butyl group, and still more preferably a butyl group.
a is an integer of 20 to 600, preferably an integer of 35 to 500, and more preferably an integer of 65 to 250.

### (Polyether Monool)

The polyether monool is a compound obtained by ring opening polymerization of an alkylene oxide and/or the above monomer a with an initiator having an active hydrogen containing group and one or more active hydrogens, wherein the compound has an initiator residue, a polyether chain, and hydroxyl groups corresponding to the number of active hydrogens in the initiator.

The proportion of the mass of monomer a with respect to the total mass of alkylene oxide and monomer a is preferably 0 to 90% by mass, more preferably 0 to 85% by mass, and still more preferably 10 to 80% by mass, from the viewpoint of adjustment of flexibility and strength.

As the above alkylene oxide, an alkylene oxide having 2 to 8 carbon atoms is preferred, and an alkylene oxide having 2 to 4 carbon atoms is more preferred. Specific examples of the above alkylene oxide include propylene oxide, ethylene oxide, 1,2-butylene oxide, and 2,3-butylene oxide.

Examples of the active hydrogen containing group that the initiator has include a hydroxyl group, a carboxy group, and an amino group having one hydrogen atom bonded to the nitrogen atom. As the above active hydrogen containing group that the initiator has, a hydroxyl group or a carboxy group is preferred, a hydroxyl group is more preferred, and an alcoholic hydroxyl group is still more preferred.

Examples of the initiator having one active hydrogen include a monohydric alcohol, a monohydric phenol, a monovalent carboxylic acid, and an amine compound having one hydrogen atom bonded to the nitrogen atom. As the above initiator, a monohydric aliphatic alcohol or a monovalent aliphatic carboxylic acid is preferred, and a monohydric aliphatic alcohol is more preferred. Also, a polyoxyalkylene monool with a lower molecular weight than the targeted polyether monool may be used as the initiator.

The number of carbon atoms in the above monohydric aliphatic alcohol as the initiator is preferably 1 to 20, and more preferably 2 to 8. Specific examples of the above monohydric aliphatic alcohol as the initiator include ethanol, propanol, 2-propanol, and butanol.

The number of carbon atoms in the above monovalent aliphatic carboxylic acid as the initiator is, including the carbon atom in the carboxy group, preferably 2 to 20, and more preferably 2 to 8.

The oxyalkylene group in the polyether monool is preferably composed of only an oxypropylene group or a combination of an oxypropylene group and a group other than that, and the oxyalkylene group other than the oxypropylene group is preferably an oxyethylene group. The proportion of the oxypropylene group with respect to the entire oxyalkylene groups in the polyether monool is preferably 50 to 100% by mass, and more preferably 80 to 100% by mass. Note that, when the initiator is a polyoxyalkylene monool with a lower molecular weight than the targeted polyether monool, the oxyalkylene group in the initiator is considered to be the oxyalkylene group in the resulting polyether monool.

In the above polyether monool, a polyoxyalkylene monool with a low hydroxyl value, that is, a high molecular weight, can be produced by ring opening polymerization of an alkylene oxide having 3 or more carbon atoms, especially propylene oxide, with an initiator in the presence of a composite metal cyanide complex catalyst.

Examples of the polyoxyalkylene monool with a low hydroxyl value include a polyoxyalkylene monool with a hydroxyl value of 40 mgKOH/g or less.

A polyoxyalkylene monool having an oxyethylene group with a low hydroxyl value can be produced by ring opening polymerization of an alkylene oxide having 3 or more carbon atoms, especially propylene oxide, using a polyoxyalkylene monool having an oxyethylene group with a high hydroxyl value, for example, a hydroxyl value of 50 mgKOH/g or more, as the initiator in the presence of a composite metal cyanide complex catalyst.

In the above polyether monool, the polyoxyalkylene monool with a high hydroxyl value and the polyoxyalkylene monool with a high hydroxyl value, which is the initiator, can also be produced using an alkaline catalyst such as KOH.

In production of the polyoxyalkylene monool, as the initiator and alkylene oxide fed into the reaction system, one with low moisture is usually used, in which the moisture has been removed by degassing under reduced pressure or the like. Usually, it is more preferable as the moisture content of the initiator in production of the polyoxyalkylene monool is lower, and it is more preferably 500 ppm by mass or less, and still more preferably 300 ppm by mass or less. When the moisture content is in this range, the amount of polyoxyalkylene diol to be produced from water is suppressed, which in turn suppresses the amount of byproduct to be eventually produced due to the above polyoxyalkylene diol, making it easier to adjust the average number of hydroxyl groups in a molecule of the resulting polyoxyalkylene monool to 1.2 or less.

It is more preferable as the moisture content in the polyether monool used as a raw material for monomer 1-1 is lower, and it is preferably 300 ppm by mass or less, more preferably 250 ppm by mass or less, and still more preferably 50 to 200 ppm by mass with respect to the polyether monool. When the moisture content is within the above range, there is less production of byproduct, which is a reaction product of moisture and an isocyanate group containing compound, and the stability of the reaction product, monomer 1-1, is improved. Furthermore, changes in the appearance of the resin composition comprising monomer 1-1 over time are likely to be suppressed and the elastic modulus of the resin cured product tends to be good.

The average number of hydroxyl groups in a molecule of the above polyether monool is preferably 0.80 to 1.20, and more preferably 0.90 to 1.10. When the average number of hydroxyl groups is within the above range, the cure shrinkage factor in the cured product is likely to be even lower.

The hydroxyl value of the above polyether monool is preferably 1.6 to 18.1 mgKOH/g, more preferably 2.8 to 14 mgKOH/g, and still more preferably 3.1 to 11.2 mgKOH/g. When the hydroxyl value is within the above range, the viscosity of the resulting curable composition is likely to be lower.

The polyether monool used in the production of monomer 1-1 may be a mixture of two or more kinds of polyether monools. In this case, each polyether monool is preferably a polyoxyalkylene monool included in the above category.

Examples of the above polyether monool include one represented by formula (1a).

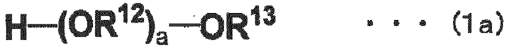

In formula (1a):
R¹², R¹³, and a have the same meanings as the same symbols in formula (1).

### (Compound Having One Isocyanate Group and One or Two (Meth)Acryloyloxy Groups in a Molecule)

As the compound having one isocyanate group and one (meth)acryloyloxy group in a molecule, a (meth)acrylate having an isocyanate group bonded to an aliphatic hydrocarbon group or an alicyclic hydrocarbon group is preferred, and an isocyanate alkyl (meth)acrylate is more preferred.

The number of carbon atoms in the alkylene group, excluding the isocyanate group, in the above compound having one isocyanate group and one (meth)acryloyloxy group in a molecule is preferably 8 or less, and more preferably 4 or less.

Examples of the above compound having one isocyanate group and one (meth)acryloyloxy group in a molecule include a compound represented by formula (1b).

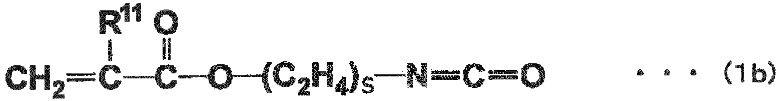

In formula (1b):
R¹¹ is a hydrogen atom or a methyl group. R¹¹ is preferably a hydrogen atom; and s is an integer of 1 to 4, preferably an integer of 1 to 2.

Specific examples of the above compound having one isocyanate group and one (meth)acryloyloxy group in a molecule include 2-isocyanate ethyl (meth)acrylate and isocyanate methyl methacrylate. Examples of commercially available products thereof include Karenz AOI and Karenz MOI (both (R), product names of Showa Denko K.K.).

Examples of the above compound having one isocyanate group and two (meth)acryloyloxy groups in a molecule include a compound represented by formula (1c).

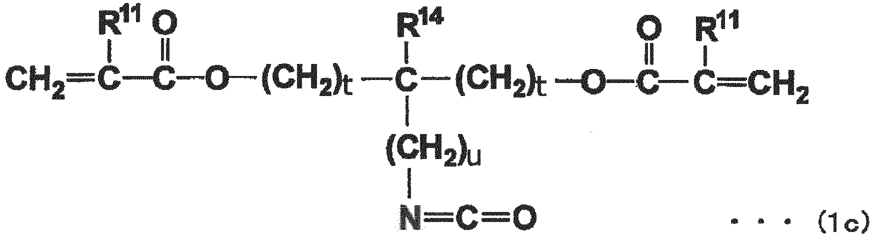

In formula (1c):
two R¹¹ are each independently a hydrogen atom or a methyl group, preferably a hydrogen atom;
R¹⁴ is a hydrogen atom or an alkyl group having 1 to 4 carbon atoms. R¹⁴ is preferably a methyl group;
t is an integer of 1 to 8. t is preferably an integer of 1 to 4, and more preferably an integer of 1 to 2; and
u is an integer of 0 to 4. u is preferably an integer of 0 to 2.

Specific examples of the above compound having one isocyanate group and two (meth)acryloyloxy groups in a molecule include 2,2-(bisacryloyloxymethyl)propyl isocyanate and 1,1-(bisacryloyloxymethyl)ethyl isocyanate (Karenz BEI (R), product name of Showa Denko K.K.), and 1,1-(bisacryloyloxymethyl)ethyl isocyanate is preferred.

The above monomer 1-1 is preferably at least one selected from the group consisting of a compound represented by formula (1-1-1), a compound represented by formula (1-1-2), and a compound represented by formula (1-1-3).

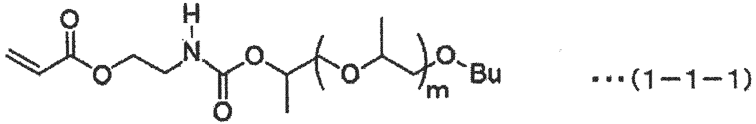

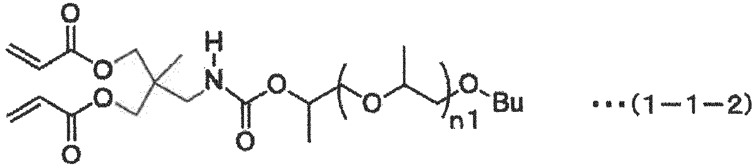

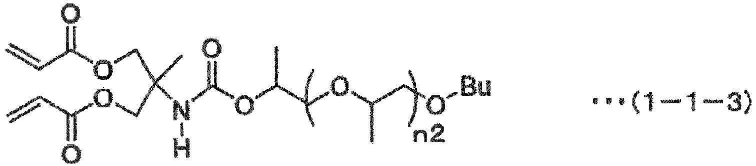

In formula (1-1-1), formula (1-1-2), and formula (1-1-3):
m, n1, and n2 are, each independently, preferably an integer of 20 to 600, more preferably an integer of 35 to 500, and still more preferably an integer of 65 to 250; and
Bu is a butyl group.

### «Monomer 1-2 (Reaction Product of (ii))»

As the monomer 1-2, a compound represented by formula (2) is preferred.

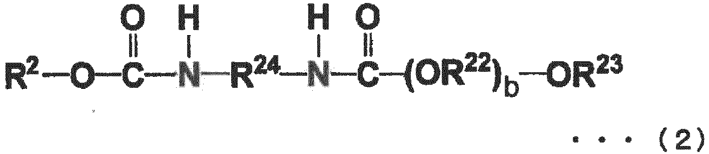

In formula (2):
R² is a monovalent organic group having one or two (meth)acryloyloxy groups;
R²² is preferably an alkylene group having 2 to 8 carbon atoms, and more preferably an alkylene group having 2 to 4 carbon atoms. Multiple R²² present in a molecule may be the same as or different from each other. When two or more kinds of R²² are present in a molecule, the linkage of -OR²²- may be either block or random. R²² is preferably at least one selected from the group consisting of an ethylene group, a propylene group, a 1,2-dimethylethylene group, and a 1-ethylethylene group, and is more preferably one or two selected from the group consisting of an ethylene group and a propylene group;
in addition, (OR²²) is also preferably a unit based on monomer a having one epoxy group and an ether bond other than the ether bond of the epoxy group in a molecule, as in the case of (OR¹²) in formula (1). The preferred aspect of monomer a is the same as in the case of monomer 1-1;
R²³ is an alkyl group having 1 to 20 carbon atoms. R²³ is preferably an alkyl group having 2 to 8 carbon atoms, and more preferably a butyl group;
R²⁴ is a divalent group formed by removing two isocyanate groups from a diisocyanate. Examples of the diisocyanate will be mentioned later; and
b is an integer of 20 to 600, b is preferably an integer of 35 to 500, and more preferably an integer of 65 to 250.

### (Polyether Monool)

The above polyether monool is the same as the polyether monool in monomer 1-1, and the preferred aspect is also the same.

Examples of the above polyether monool include one represented by formula (2a).

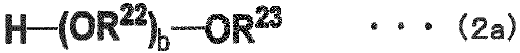

In formula (2a):
R²², R²³, and b have the same meanings as the same symbols in formula (2).

### (Diisocyanate)

The diisocyanate is a compound having two isocyanate groups in a molecule.

Examples of the diisocyanate include a non-yellowing aromatic diisocyanate, an aliphatic diisocyanate, an alicyclic diisocyanate, and a variety of modified forms of these diisocyanates (modified forms having two isocyanate groups). Two or more kinds of diisocyanates may be used in combination.

The diisocyanate is preferably at least one selected from the group consisting of an aliphatic diisocyanate and an alicyclic diisocyanate because they have excellent light resistance, weather resistance, and heat resistance.

Specific examples of the above non-yellowing aromatic diisocyanate include xylylene diisocyanate and tetramethyl xylylene diisocyanate.

Specific examples of the above aliphatic diisocyanate include 1,6-hexamethylene diisocyanate, 2,2,4-trimethylhexamethylene diisocyanate, and lysine diisocyanate.

Examples of the above alicyclic diisocyanate include isophorone diisocyanate, 4,4'-dicyclohexylmethane diisocyanate, 2,5-norbornane diisocyanate, and 2,6-norbornane diisocyanate.

Examples of the above diisocyanate include a compound represented by formula (2b).

**O=C=N-R²⁴-N=C=O** ··· **(2b)**

In formula (2b):
R²⁴ has the same meaning as the same symbol in formula (2).

As the above diisocyanate, 1,6-hexamethylene diisocyanate, isophorone diisocyanate, and 4,4'-dicyclohexylmethane diisocyanate are preferred because they tend to achieve both strength and elongation of the cured product of the resulting resin composition.

### (Compound Having One Group That Reacts with an Isocyanate Group in a Molecule and One or Two (Meth)Acryloyloxy Groups in a Molecule)

Examples of the group that reacts with an isocyanate group include a hydroxyl group and an amino group having the nitrogen atom to which a hydrogen atom is bonded. The number of hydroxyl groups and the number of hydrogen atoms bonded to the nitrogen atom in the group that reacts with an isocyanate group are preferably one. As the group that reacts with an isocyanate group, a hydroxyl group bonded to an aliphatic hydrocarbon group or alicyclic hydrocarbon group is preferred.

As the above compound having one group that reacts with an isocyanate group in a molecule and one (meth)acryloyloxy group in a molecule, a hydroxyalkyl (meth)acrylate and a hydroxycycloalkyl (meth)acrylate are preferred, and a hydroxyalkyl (meth)acrylate in which the hydroxyalkyl group has 8 or less carbon atoms is particularly preferred.

Examples of the above compound having one group that reacts with an isocyanate group in a molecule and one (meth)acryloyloxy group in a molecule include a compound represented by formula (2c).

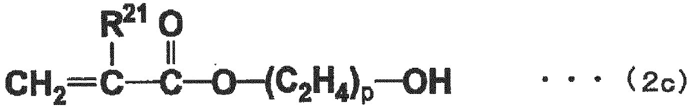

In formula (2c):
R²¹ is a hydrogen atom or a methyl group. R²¹ is preferably a hydrogen atom; and
p is an integer of 1 to 4. p is preferably an integer of 1 to 2.

Specific examples of the above compound having a group that reacts with an isocyanate group and a (meth)acryloyloxy group include 2-hydroxyethyl (meth)acrylate, 2-hydroxypropyl (meth)acrylate, 2-hydroxybutyl (meth)acrylate, 4-hydroxybutyl (meth)acrylate, and 6-hydroxyhexyl (meth)acrylate. Examples of commercially available products thereof include Lightester HO-250(N), Lightester HOP(N), Lightester HOA(N), Lightester HOP-A(N), and Lightester HOB(N) (all product names of Kyoeisha Chemical Co., Ltd.), and 4-HBA (product name of Osaka Organic Chemical Industry Ltd.).

Examples of the above compound having one group that reacts with an isocyanate group in a molecule and two (meth)acryloyloxy groups in a molecule include a compound represented by formula (2d).

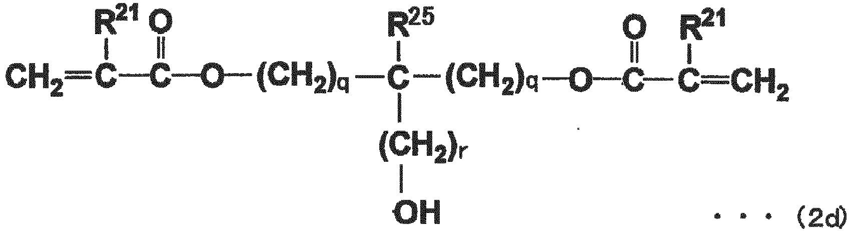

In formula (2d):
two R²¹ are each independently a hydrogen atom or a methyl group. R²¹ is preferably a hydrogen atom;
R²⁵ is a hydrogen atom or an alkyl group having 1 to 4 carbon atoms. R²⁵ is preferably a methyl group;
q is an integer of 1 to 8. q is preferably an integer of 1 to 4, and more preferably an integer of 1 to 2; and
r is an integer of 0 to 4. r is preferably an integer of 0 to 2.

Specific examples of the above compound having one group that reacts with an isocyanate group in a molecule and two (meth)acryloyloxy groups in a molecule include 2,2-(bisacryloyloxymethyl)propan-1-ol and 1,1-(bisacryloyloxymethyl)ethan-1-ol, and 1,1-(bisacryloyloxymethyl)ethan-1-ol is preferred.

### «Monomer 1-3 (Reaction Product of (iii))»

As the monomer 1-3, a compound represented by formula (III) is preferred.

R³-NH-C(=O)-Z ··· (III)

R³ is a monovalent organic group having one or two (meth)acryloyloxy groups.

Z is the residue of the polyether polyol formed by removing one hydrogen atom from one of the hydroxyl groups in the polyether polyol.

As the monomer 1-3, a compound represented by formula (3) is more preferred.

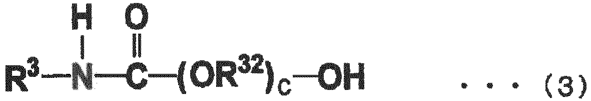

In formula (3):
R³ is the same as R³ in formula (III);
R³² is preferably an alkylene group having 2 to 8 carbon atoms, and more preferably an alkylene group having 2 to 4 carbon atoms. Multiple R³² present in a molecule may be the same as or different from each other. When two or more kinds of R³² are present in a molecule, the linkage of -OR³²- may be either block or random. R³² is preferably at least one selected from the group consisting of an ethylene group, a propylene group, a 1,2-dimethylethylene group, and a 1-ethylethylene group, and is more preferably one or two selected from the group consisting of an ethylene group and a propylene group;
in addition, (OR³²) is also preferably a unit based on monomer a having one epoxy group and an ether bond other than the ether bond of the epoxy group in a molecule, as in the case of (OR¹²) in formula (1). The preferred aspect of monomer a is the same as in the case of monomer 1-1; and
c is an integer of 20 to 600. c is preferably an integer of 35 to 500, and more preferably an integer of 65 to 250.

### (Polyether Polyol)

The polyether polyol is a compound obtained by ring opening polymerization of an alkylene oxide and/or the above monomer a with an initiator having an active hydrogen containing group and two or more active hydrogens, wherein the compound has an initiator residue, a polyether chain, and hydroxyl groups corresponding to the number of active hydrogens in the initiator.

As the above alkylene oxide, an alkylene oxide having 2 to 4 carbon atoms is preferred. Specific examples of the above alkylene oxide having 2 to 4 carbon atoms include propylene oxide, ethylene oxide, 1,2-butylene oxide, and 2,3-butylene oxide.

Also, as the monomer a, a monomer represented by the above formula (12) is preferred, and examples of the monomer represented by formula (12) include methyl glycidyl ether, butyl glycidyl ether, 2-ethylhexyl glycidyl ether, lauryl glycidyl ether, and hexyl glycidyl ether, and from the point that the flexibility of the cured product of the resulting resin composition is even better, butyl glycidyl ether and 2-ethylhexyl glycidyl ether are preferred.

The proportion of the mass of monomer a with respect to the total mass of alkylene oxide and monomer a is preferably 0 to 90% by mass, more preferably 0 to 85% by mass, and still more preferably 10 to 80% by mass, from the viewpoint of adjustment of flexibility and strength of the cured product of the resulting resin composition.

Examples of the active hydrogen containing group that the initiator has include a hydroxyl group, a carboxy group, and an amino group having a hydrogen atom bonded to the nitrogen atom. As the above active hydrogen containing group that the initiator has, a hydroxyl group is preferred, and an alcoholic hydroxyl group is more preferred.

Examples of the initiator having two or more active hydrogens include water, a polyhydric alcohol, a polyhydric phenol, a polyvalent carboxylic acid, and an amine compound having two or more hydrogen atoms bonded to the nitrogen atom. As the above initiator, water or a dihydric aliphatic alcohol is preferred, and a dihydric aliphatic alcohol is more preferred. Also, a polyoxyalkylene polyol with a lower molecular weight than the targeted polyether polyol may be used as the initiator.

The number of carbon atoms in the above dihydric aliphatic alcohol as the initiator is preferably 2 to 8. Specific examples of the above dihydric aliphatic alcohol as the initiator include ethylene glycol, propylene glycol, polypropylene glycol such as dipropylene glycol, and 1,4-butanediol.

The oxyalkylene group in the polyether polyol is preferably composed of only an oxypropylene group or a combination of an oxypropylene group and a group other than that, and the oxyalkylene group other than the oxypropylene group is preferably an oxyethylene group or an oxytetramethylene group. The proportion of the oxypropylene group with respect to the entire oxyalkylene groups in the polyether polyol is preferably 50 to 100% by mass, and more preferably 80 to 100% by mass.

Note that, when the initiator is a polyoxyalkylene polyol with a lower molecular weight than the targeted polyether polyol, the oxyalkylene group in the initiator is considered to be the oxyalkylene group in the resulting polyether polyol.

In the above polyether polyol, a polyoxyalkylene polyol with a low hydroxyl value, that is, a high molecular weight, can be produced by ring opening polymerization of an alkylene oxide having 3 or more carbon atoms, especially propylene oxide, with an initiator in the presence of a composite metal cyanide complex catalyst.

Examples of the polyoxyalkylene polyol with a low hydroxyl value include a polyoxyalkylene polyol with a hydroxyl value of 40 mgKOH/g or less.

In the above polyether polyol, a polyoxyalkylene polyol having an oxyethylene group with a low hydroxyl value can be produced by ring opening polymerization of an alkylene oxide having 3 or more carbon atoms, especially propylene oxide, using a polyoxyalkylene polyol having an oxyethylene group with a high hydroxyl value, for example, a hydroxyl value of 50 mgKOH/g or more, as the initiator in the presence of a composite metal cyanide complex catalyst.

In the above polyether polyol, the polyoxyalkylene polyol with a high hydroxyl value and the polyoxyalkylene polyol with a high hydroxyl value, which is the initiator, can also be produced using an alkaline catalyst such as KOH.

The average number of hydroxyl groups in a molecule of the above polyether polyol is preferably 1.60 to 2.00, more preferably 1.70 to 2.00, and still more preferably 1.80 to 1.96. A polyether polyol with an average number of hydroxyl groups in a molecule of 1.60 to 2.00 may be referred to as a polyether diol. When the average number of hydroxyl groups is within the above range, the flexibility and strength of the cured product of the resulting resin composition are more excellent.

The hydroxyl value of the above polyether polyol is preferably 1.6 to 18.1 mgKOH/g, and more preferably 2.8 to 14 mgKOH/g. When the hydroxyl value is within the above range, the viscosity of the composed resin cured product of the resulting resin composition is easily adjusted to a good range, and the flexibility and strength of the cured product are more excellent.

The polyether polyol used in the production of monomer 1-3 may be a mixture of two or more kinds of polyether polyols. In this case, each polyether polyol is preferably a polyether polyol included in the above category, and is more preferably a polyether diol included in the above category.

Examples of the above polyether polyol include one represented by formula (3a).

**H-(OR³²)_{c}-OH** ··· **(3a)**

In formula (3a):
R³² and c have the same meanings as the same symbols in formula (3).

### (Compound Having One Isocyanate Group in a Molecule and One or Two (Meth)Acryloyloxy Groups in a Molecule)

The above compound having one isocyanate group in a molecule and one or two (meth)acryloyloxy groups in a molecule is the same as the compound having one isocyanate group in a molecule and one or two (meth)acryloyloxy groups in a molecule in monomer 1-1, and the preferred aspect is also the same.

### <Second Monomer>

The above second monomer is at least one selected from the group consisting of a reaction product of (iv) below (hereinafter, may be referred to as "monomer 2-1") and a reaction product of (v) below (hereinafter, may be referred to as "monomer 2-2"):
(iv) a reaction product of a polyether polyol and a compound having a (meth)acryloyloxy group, where the compound having a (meth)acryloyloxy group is a compound having one isocyanate group in a molecule and having one or two (meth)acryloyloxy groups in a molecule, and the hydroxyl group in the polyether polyol and the compound having a (meth)acryloyloxy group are equimolar; and
(v) a reaction product of a polyol (A), a polyisocyanate, and a compound having a (meth)acryloyloxy group, where the polyol (A) is at least one or more selected from the group consisting of a polyether polyol, a polyester polyol, a poly(meth)acrylic polyol, a polycarbonate polyol, a castor oil based polyol, and a polyolefin polyol, the compound having a (meth)acryloyloxy group is a compound having one group that reacts with an isocyanate group in a molecule and having one or two (meth)acryloyloxy groups in a molecule, and the total number of moles of the hydroxyl group of the polyol and the group that reacts with an isocyanate group of the compound having a (meth)acryloyloxy group is equal to the number of moles of the isocyanate group of the polyisocyanate.

The number average molecular weight of the above second monomer is preferably 6,000 to 60,000, more preferably 8,000 to 40,000, and still more preferably 10,000 to 34,000. When the above number average molecular weight is 6,000 or more, the hardness of the resin cured product becomes even lower, and when it is 60,000 or less, the viscosity becomes even lower.

### <<Monomer 2-1 (Reaction Product of (iv))>>

The above polyether polyol is the same as the polyether polyol in monomer 1-3, and the preferred aspect is also the same.

The above compound having one isocyanate group in a molecule and one or two (meth)acryloyloxy groups in a molecule is the same as the compound having one isocyanate group in a molecule and one or two (meth)acryloyloxy groups in a molecule in monomer 1-1, and the preferred aspect is also the same.

As the monomer 2-1, a compound represented by formula (IV) is preferred.

R⁴-NHC(=O)-Z-OC(=O)NH-R⁴ ... (IV)

Two R⁴ in formula (IV) are each independently a monovalent organic group having one or two (meth)acryloyloxy groups.

Z is the residue of the polyether polyol formed by removing two hydrogen atoms from two of the hydroxyl groups in the polyether polyol.

As the monomer 2-1, a compound represented by formula (4) is more preferred.

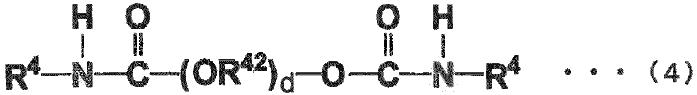

In formula (4):
R⁴ is the same as R⁴ in formula (IV);
R⁴² is preferably an alkylene group having 2 to 8 carbon atoms, and more preferably an alkylene group having 2 to 4 carbon atoms. Multiple R⁴² present in a molecule may be the same as or different from each other. When two or more kinds of R⁴² are present in a molecule, the linkage of -OR⁴²- may be either block or random. R⁴² is preferably at least one selected from the group consisting of an ethylene group, a propylene group, a 1,2-dimethylethylene group, and a 1-ethylethylene group, and is more preferably one or two selected from the group consisting of an ethylene group and a propylene group;
in addition, (OR⁴²) is also preferably a unit based on monomer a having one epoxy group and an ether bond other than the ether bond of the epoxy group in a molecule, as in the case of (OR¹²) in formula (1). The preferred aspect of monomer a is the same as in the case of monomer 1-1; and
d is an integer of 20 to 600. d is preferably an integer of 35 to 500, and more preferably an integer of 65 to 250.

### <<Monomer 2-2 (Reaction Product of (v))>>

The polyether polyol in the above polyol (A) is the same as the polyether polyol in monomer 1-3, and the preferred aspect is also the same.

As the polyether polyol, polyester polyol, poly(meth)acrylic polyol, polycarbonate polyol, castor oil-based polyol, and polyolefin polyol in the above polyol (A), those described in paragraphs 0016 to 0028 of JP 2020-37689 A can be used without particular limitations.

As the polyether polyol, a polymer polyol in which a polymer having units based on (meth)acrylate monomer is dispersed in a polyether polyol can also be used. The polymer polyol may be a commercially available product. Examples of such a product include the "ULTIFLOW series" and the "SHARPFLOW series" (product names of Sanyo Chemical Industries, Ltd.) and the "EXCENOL series" (product names of AGC Inc.).

The above compound having one group that reacts with an isocyanate group in a molecule and one or two (meth)acryloyloxy groups in a molecule is the same as the compound having one group that reacts with an isocyanate group in a molecule and one or two (meth)acryloyloxy groups in a molecule in monomer 1-2, and the preferred aspect is also the same.

The polyisocyanate is a compound having two or more isocyanate groups in a molecule. As the polyisocyanate, a compound having two or three isocyanate groups in a molecule is preferred, and a diisocyanate is more preferred. The diisocyanate is the same as the diisocyanate in monomer 1-2, and the preferred aspect is also the same.

Specific examples of the polyisocyanate include tolylene diisocyanate, hexamethylene diisocyanate, diphenyl methylene diisocyanate, isophorone diisocyanate, and polyisocyanate. Hexamethylene diisocyanate and isophorone diisocyanate are preferred from the point that the elongation and strength of the cured product of the resin composition comprising the resulting monomer 2-2 can be easily adjusted.

As the monomer 2-2, a compound represented by formula (5) is preferred.

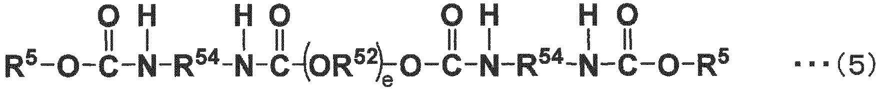

In formula (5):
two R⁵ are each independently a monovalent organic group having one or two (meth)acryloyloxy groups;
R⁵² is preferably an alkylene group having 2 to 8 carbon atoms, and more preferably an alkylene group having 2 to 4 carbon atoms. Multiple R⁵² present in a molecule may be the same as or different from each other. When two or more kinds of R⁵² are present in a molecule, the linkage of -OR⁵²- may be either block or random. R⁵² is preferably at least one selected from the group consisting of an ethylene group, a propylene group, a 1,2-dimethylethylene group, and a 1-ethylethylene group, and is more preferably one or two selected from the group consisting of an ethylene group and a propylene group;
in addition, (OR⁵²) is also preferably a unit based on monomer a having one epoxy group and an ether bond other than the ether bond of the epoxy group in a molecule, as in the case of (OR¹²) in formula (1). The preferred aspect of monomer a is the same as in the case of monomer 1-1;
two R⁵⁴ are each independently a divalent group formed by removing two isocyanate groups from a diisocyanate. The diisocyanate is the same as the diisocyanate in monomer 1-2, and the preferred aspect is also the same; and
e is an integer of 20 to 600. e is preferably an integer of 35 to 500, and more preferably an integer of 65 to 250.

### <Proportion of First Monomer and Second Monomer>

In the resin composition of the present invention, the proportion of the above first monomer with respect to the total mass of the above first monomer and the above second monomer is 50 to 98% by mass.

The proportion of the above first monomer with respect to the total mass of the above first monomer and the above second monomer is 50% by mass or more, preferably 55% by mass or more, more preferably 70% by mass or more, still more preferably 80% by mass or more, and particularly preferably 85% by mass or more. The upper limit of the proportion of the above first monomer with respect to the total mass of the above first monomer and the above second monomer is 98% by mass.

The proportion of the above second monomer with respect to the total mass of the above first monomer and the above second monomer is 50% by mass or less, preferably 45% by mass or less, more preferably 30% by mass or less, still more preferably 20% by mass or less, and particularly preferably 15% by mass or less. The lower limit of the proportion of the above second monomer with respect to the total mass of the above first monomer and the above second monomer is 2% by mass.

The higher the proportion of the above first monomer with respect to the total mass of the above first monomer and the above second monomer, the lower the viscosity of the resin composition of the present invention tends to become.

The lower the proportion of the above second monomer with respect to the total mass of the above first monomer and the above second monomer, the lower the hardness and the better the elongation of the resin cured product obtained by curing the resin composition of the present invention tends to become.

The resin composition of the present invention may comprise two or more kinds of the above first monomer.

The resin composition of the present invention may comprise two or more kinds of the above second monomer.

The proportion of the total of the above first monomer and the above second monomer with respect to the gross mass of the resin composition of the present invention is preferably 60% by mass or more, more preferably 75% by mass or more, and still more preferably 90% by mass or more. The proportion of the total of the above first monomer and the above second monomer with respect to the gross mass of the resin composition of the present invention is preferably less than 100% by mass.

### <Components Other Than First Monomer and Second Monomer>

In addition to the above first monomer and the above second monomer, the resin composition of the present invention may further comprise a photo radical polymerization initiator, a photocation polymerizable organic compound and a photocation polymerization initiator, a viscosity modifier, a photosensitizer, and a polymerization inhibitor, as required.

### <<Photo Radical Polymerization Initiator>>

As the above photo radical polymerization initiator, a polymerization initiator that can initiate radical polymerization of the above first monomer and the above second monomer when irradiated with active energy rays can be used.

Examples of the above photo radical polymerization initiator include benzil or a dialkyl acetal compound thereof, a benzoyl compound, an acetophenone compound, benzoin or an alkyl ether compound thereof, a benzophenone compound, an acylphosphine oxide compound, and a thioxanthone compound.

Specific examples of the above benzil or a dialkyl acetal compound thereof include benzil dimethyl ketal and benzil-β-methoxyethyl acetal.

Specific examples of the above benzoyl compound include 1-hydroxycyclohexyl phenyl ketone.

Specific examples of the above acetophenone compound include diethoxyacetophenone, 2-hydroxymethyl-1-phenylpropan-1-one, 4'-isopropyl-2-hydroxy-2-methyl-propiophenone, 2-hydroxy-2-methyl-propiophenone, p-dimethylaminoacetophenone, p-tert-butyldichloroacetophenone, p-tert-butyltrichloroacetophenone, and p-azidobenzalacetophenone.

Specific examples of the above benzoin or an alkyl ether compound thereof include benzoin, benzoin methyl ether, benzoin ethyl ether, benzoin isopropyl ether, benzoin n-butyl ether, and benzoin isobutyl ether.

Specific examples of the above benzophenone compound include benzophenone, methyl o-benzoylbenzoate, Michler's ketone, 4,4'-bisdiethylaminobenzophenone, and 4,4'-dichlorobenzophenone.

Specific examples of the above acylphosphine oxide compound include 2,4,6-trimethylbenzoyldiphenylphosphine oxide and phenylbis(2,4,6-trimethylbenzoyl)phosphine oxide. Examples of commercially available products thereof include IRGACURE TPO, IRGACURE 819, and Darocur 1173 (all product names of BASF SE).

Specific examples of the above thioxanthone compound include thioxanthone, 2-methylthioxanthone, 2-ethylthioxanthone, 2-chlorothioxanthone, and 2-isopropylthioxanthone.

The content of the above photo radical polymerization initiator in the resin composition of the present invention is preferably 0.01 to 20 parts by mass, more preferably 0.1 to 10 parts by mass, and still more preferably 0.2 to 5 parts by mass, with respect to 100 parts by mass of the total of the above first monomer and the above second monomer.

The above photo radical polymerization initiator can be used alone as one kind, or in combination of two or more kinds.

### <<Photocation Polymerizable Organic Compound>>

Examples of the above photocation polymerizable organic compound include an epoxy compound, an oxetane compound, a cyclic ether compound, a cyclic acetal compound, a cyclic lactone compound, a spiro orthoester compound, and a vinyl ether compound. The above photocation polymerizable organic compound is preferably at least one selected from the group consisting of an epoxy compound and an oxetane compound, and more preferably an epoxy compound.

The above photocation polymerizable organic compound can be used alone as one kind, or in combination of two or more kinds.

The content of the above photocation polymerizable organic compound in the resin composition of the present invention is preferably 80% by mass or less, more preferably 60% by mass or less, and still more preferably 50% by mass or less, with respect to the gross mass of the resin composition of the present invention.

### <<Photocation Polymerization Initiator>>

Examples of the above photocation polymerization initiator include an aromatic sulfonium salt compound, a phosphonium salt, and an iodonium salt compound.

Examples of the above photocation polymerization initiator include a cation polymerization initiator in which a sulfonium ion represented by the general formula: [(R⁴)(R⁵)(R⁶)S⁺], wherein R⁴, R⁵, and R⁶ are each independently a monovalent organic group bonded to sulfur (S), is bonded to an anion (phosphate ion) represented by the general formula: [(Rf)ₘPF₆₋ₘ⁻], wherein Rf is a fluoroalkyl group and m is an integer of 0 to 6, an anion represented by the formula: [SbF₆⁻], an anion represented by the formula: [BF₄⁻], an anion represented by the formula: [AsF₆⁻], or the like, as well as a cation polymerization initiator in which an iodonium ion represented by the general formula: [(R⁷)(R⁸)I⁺], wherein R⁷ and R⁸ are each independently a monovalent organic group bonded to iodine (I), is bonded to an anion represented by the formula: [PF₆⁻], an anion represented by the formula: [SbF₆⁻], an anion represented by the formula: [B(C₆F₅)₄⁻], an anion represented by the formula: [N(SO₂C₄F₉)₂⁻], or the like.

Specific examples of the above photocation polymerization initiator include CPI-101A, CPI-100P, and CPI-200K (all product names of San-Apro Ltd.), and WPI-113, WPI-169, WPI-170, and WPI-124 (all product names of FUJIFILM Wako Pure Chemical Corporation).

The content of the above photocation polymerization initiator in the resin composition of the present invention is preferably 0.01 to 20 parts by mass, more preferably 0.1 to 10 parts by mass, and still more preferably 0.2 to 5 parts by mass, with respect to 100 parts by mass of the total of the above photocation polymerizable organic compound.

### <<Viscosity Modifier>>

Examples of the above viscosity modifier include a third monomer having a (meth)acryloyloxy group, other than the first monomer and the second monomer. The third monomer is preferably a (meth)acrylate monomer.

Specific examples of the above (meth)acrylate monomer include methyl (meth)acrylate, ethyl (meth)acrylate, propyl (meth)acrylate, isopropyl (meth)acrylate, 2-ethylhexyl (meth)acrylate, 2-hydroxyethyl (meth)acrylate, 2-hydroxypropyl (meth)acrylate, lauryl (meth)acrylate, stearyl (meth)acrylate, isooctyl (meth)acrylate, tetrahydrofurfuryl (meth)acrylate, isobornyl (meth)acrylate, benzyl (meth)acrylate, acryloylmorpholine, 1,4-butanediol di(meth)acrylate, 1,6-hexanediol di(meth)acrylate, diethylene glycol di(meth)acrylate, triethylene glycol di(meth)acrylate, neopentyl glycol di(meth)acrylate, polyethylene glycol di(meth)acrylate, polypropylene glycol di(meth)acrylate, trimethylolpropane tri(meth)acrylate, pentaerythritol tri(meth)acrylate, dipentaerythritol hexa(meth)acrylate, 2,2,2-trifluoroethyl (meth)acrylate, 2,2,3,3-tetrafluoropropyl (meth)acrylate, 1H,1H-nonafluoropentyl (meth)acrylate, 1H,1H,5H-octafluoropentyl (meth)acrylate, and 1H,1H,2H,2H-nonafluorohexyl (meth)acrylate.

When the resin composition of the present invention contains the third monomer, the viscosity can be lowered more.

### <<Photosensitizer>>

Examples of the above photosensitizer include a dialkoxyanthracene such as dibutoxyanthracene, and thioxanthone.

### <<Polymerization Inhibitor>>

Examples of the above polymerization inhibitor include 4-tert-butylpyrocatechol, tert-butylhydroquinone, 1,4-benzoquinone, dibutylhydroxytoluene, 1,1-diphenyl-2-picrylhydrazyl free radical, hydroquinone, mequinol, and phenothiazine.

### <<Other Additives That May Be Included>>

The resin composition of the present invention may further comprise additives such as a coloring agent including a pigment and a dye, a defoaming agent, a leveling agent, a thickening agent, a flame retardant, an antioxidant, a UV absorber, a filler (crosslinked polymer, silica, glass powder, ceramic powder, metal powder, and the like), and a resin for modification, as required, as long as the effects of the present invention are not impaired.

The resin composition of the present invention may further comprise a polyalkylene ether compound not having a polymerizable unsaturated group for the purpose of improving the impact resistance of the resin cured product.

When the resin composition of the present invention contains the above polyalkylene ether compound, the physical properties such as impact resistance of the resin cured product obtained by curing the resin composition of the present invention are improved more.

Specific examples of the above polyalkylene ether compound include a polyethylene glycol, a polypropylene glycol, a polytetramethylene glycol, a polyethylene oxide-polypropylene oxide block copolymer, a random copolymer of ethylene oxide and propylene oxide, a polyether in which an oxytetramethylene unit having an alkyl substituent (tetramethylene ether unit having an alkyl substituent) represented by the formula: -CH₂CH₂CH(R⁹)CH₂O-, wherein R⁹ is an alkyl group having 1 to 5 carbon atoms, and is preferably a methyl group or an ethyl group is bonded, and a polyether in which the above oxytetramethylene unit and the oxytetramethylene unit having an alkyl substituent represented by the formula: -CH₂CH₂CH(R⁹)CH₂O-, wherein R⁹ is an alkyl group having 1 to 5 carbon atoms, described above are randomly bonded.

As the above polyalkylene ether compound, a polytetramethylene glycol with a number average molecular weight in the range of 500 to 10,000 and a polyether in which a tetramethylene ether unit and a unit of the formula: - CH₂CH₂CH(R⁹))CH₂O-, wherein R⁹ is an alkyl group having 1 to 5 carbon atoms, are randomly bonded are preferred because the dimensional stability and the stability of physical properties of the resin cured product are excellent.

When the resin composition of the present invention contains the above polyalkylene ether compound, the content of the above polyalkylene ether compound is preferably 1 to 30% by mass, and more preferably 2 to 20% by mass, with respect to the entire mass of the resin composition of the present invention.

The above polyalkylene ether compound can be used alone as one kind, or in combination of two or more kinds.

### <Characteristics of Resin Composition>

### <<Viscosity>>

The resin composition of the present invention has a viscosity at 25°C of preferably 30 Pa·s or less, more preferably 10 Pa·s or less, and still more preferably 5 Pa·s or less. Although it is not particularly limited, the lower limit of the viscosity at 25°C of the resin composition of the present invention is usually 0.1 Pa·s.

### <<Glass Transition Temperature>>

The resin composition of the present invention has a glass transition temperature of -75 to -50°C, preferably -73 to -55°C, and more preferably -71 to - 60°C.

When the resin composition of the present invention has a glass transition temperature of -75 to -50°C, the elastic modulus of the cured product obtained by curing the resin composition of the present invention is likely to be within the range suited for artificial organs and organ models.

### <Applications of Resin Composition>

The resin composition of the present invention is suited as a fabricating material for 3D printers due to its low viscosity, and is particularly suited as a fabricating material for 3D printers using the photofabrication method. The fabricating material for 3D printers using the photofabrication method is a photocurable resin composition that can be used for obtaining a cured product with a three-dimensional shape by using 3D data created by CAD or the like as the blueprint and irradiating a photocurable resin composition with ultraviolet rays or the like to create and gradually process or gradually laminate its cross-sectional shape. Especially, it is suitable for 3D printers using inkjet system, where even lower viscosity is required.

When the resin composition of the present invention comprises a photo radical polymerization initiator in addition to the above first monomer and the above second monomer, the resin composition of the present invention can be used as a photocurable resin composition.

### [Method for Producing Resin Cured Product and Resin Cured Product]

A resin cured product of the present invention can be produced by irradiating with light a resin composition of the present invention that comprises at least a first monomer and a second monomer, and a photo radical polymerization initiator (hereinafter, referred to as a "photocurable resin composition of the present invention").

Both of the conventionally known stereolithographic method and apparatus can be used in carrying out stereolithography using the photocurable resin composition of the present invention to produce the resin cured product.

Representative examples of the above stereolithographic method include a method of repeating a lamination operation in which a cured layer is formed by selectively irradiating the photocurable resin composition of the present invention in a liquid state with active energy rays so as to obtain a cured layer having the desired pattern, an uncured photocurable resin composition is then supplied to this cured layer, and it is irradiated with active energy rays in the same manner to form a new cured layer that is continuous with the above cured layer, thereby eventually obtaining the targeted resin cured product.

Examples of the above active energy rays include ultraviolet rays, electron beams, X rays, radioactive rays, and radiofrequency waves. Among the above, ultraviolet rays with a wavelength of 300 to 410 nm are preferred from the point of economic efficiency. As the light source in that case, for example, an ultraviolet laser (for example, semiconductor pumped solid state laser, Ar laser, He-Cd laser, LD laser, or the like), a high-pressure mercury lamp, an extra high pressure mercury lamp, a low-pressure mercury lamp, a xenon lamp, a halogen lamp, a metal halide lamp, an ultraviolet LED (light emitting diode), or an ultraviolet fluorescent lamp is used.

When irradiating the surface to be modeled composed of the photocurable resin composition with active energy rays to form each cured resin layer with a predetermined shape pattern, the cured resin layer may be formed by the point drawing system or the line drawing system using active energy rays focused into a point shape such as laser beams, or alternatively, the fabrication system may be employed in which the cured resin layer is formed by irradiating the surface to be modeled with active energy rays in a planar manner through a planar drawing mask formed by multiple arrays of micro light shutters such as liquid crystal shutters or digital micromirror shutters (DMD).

The cured product obtained by photofabrication using the photocurable resin composition of the present invention may be used as it is without heat treatment or the like, but when the photofabrication is carried out according to the steps described above and the resulting three-dimensional fabricated object is then subjected to heat treatment, the thermal deformation temperature becomes even higher, and the heat resistance is improved more.

The heat treatment temperature in that case is preferably 100°C or higher, and more preferably 110 to 180°C.

The heat treatment time in that case can be selected as appropriate depending on the size, shape, and other parameters of the cured product.

The heat treatment can be carried out by a method in which the three-dimensional fabricated object obtained by the photofabrication is placed in a heating chamber and heated, a method in which the object is heated with a heat medium such as silicone oil, and other methods.

The cure shrinkage factor, which is the shrinkage rate when the photocurable resin composition of the present invention is cured, is preferably 6% or less, more preferably 4% or less, and still more preferably 3% or less because the fabrication accuracy is likely to be good. When the cure shrinkage factor is at or below the upper limit value, the three-dimensional model ability is likely to be good.

The storage elastic modulus of the resin cured product obtained by curing the photocurable resin composition of the present invention is, in the resin cured product obtained by curing a photocurable resin composition comprising only the first monomer and the second monomer as the monomers, preferably 1 to 200 kPa, more preferably 3 to 180 kPa, and still more preferably 3 to 180 kPa. In the resin cured product obtained by curing a photocurable resin composition comprising the first monomer, the second monomer, and the third monomer as the monomers, the storage elastic modulus is preferably 0.1 to 20 MPa, more preferably 0.3 to 18 MPa, and still more preferably 0.4 to 15 MPa. When the storage elastic modulus is within the above range, the breaking strength is likely to be good.

The photocurable resin composition of the present invention can be widely used in the field of stereolithography, and although not limited in any way, examples of the representative application fields may include shape confirmation models for verifying the external design in the middle of design, functional test models for checking the functionality of components, master models for producing casting molds, master models for producing metal molds, direct molds for prototype metal molds, and final products.

### [Action Mechanism]

Because the resin composition of the present invention comprises the first monomer and the second monomer and the proportion of the first monomer with respect to the total of the above first monomer and the above second monomer is 50 to 98% by mass, it was made possible to achieve low viscosity.

Although it is not possible to state with certainty, the action mechanism of the present invention is assumed to be due to the fact that the proportion of the first monomer is 50% by mass, which lowers the concentration of (meth)acryloyloxy groups and suppresses intermolecular interactions.

### Examples

Hereinafter, the present invention will be described more specifically with reference to working examples. However, the present invention is not limited to the working examples mentioned later, and various modifications can be made without departing from the gist of the present invention.

Note that Examples 1 to 7 correspond to the working examples.

### [Production Example 1-1: Production of Monool (1)]

In a pressure resistant reactor equipped with a stirrer and a nitrogen inlet tube, 0.2 g of zinc hexacyanocobaltate-tert-butyl alcohol complex (hereinafter, also referred to as "DMC-TBA"), which is a composite metal cyanide complex catalyst, and 59 g of n-butanol, which is an initiator, were charged, and in a nitrogen atmosphere at 130°C, 3,941 g of propylene oxide (hereinafter, also referred to as "PO") was fed over 7 hours while adding at a constant rate. Then, after confirming that the decline of the internal pressure of the pressure resistant reactor had stopped, 4,000 g of the product was taken out. The main component in the product, excluding byproducts, metals derived from the catalyst, and the like, was a polyoxypropylene monool (monool (1)) with a hydroxyl value of 11.2 mgKOH/g (molecular weight in terms of hydroxyl value: 5,000), an average number of hydroxyl groups of 1.03, and a moisture content of 120 ppm by mass. Also, as a byproduct, a polyoxypropylene glycol (polyol (1)), which used moisture in the system as the initiator, was obtained at 7% by mass in the product. The polyol (1) had a hydroxyl value of 11.2 mgKOH/g (molecular weight in terms of hydroxyl value: 10,000) and an average number of hydroxyl groups of 1.65 to 2.0. In the obtained product, Zn and Co were contained at 8 ppm by mass and 2 ppm by mass, respectively.

### [Production Example 1-2: Production of Monool (2)]

In a pressure resistant reactor equipped with a stirrer and a nitrogen inlet tube, 0.2 g of DMC-TBA and 74 g of n-butanol, which is an initiator, were charged, and in a nitrogen atmosphere at 130°C, 3,743 g of PO and 1,182 g of ethylene oxide (hereinafter, also referred to as "EO") were fed over 7 hours while adding at a constant rate. Then, after confirming that the decline of the internal pressure of the pressure resistant reactor had stopped, 4,000 g of the product was taken out. The main component in the product, excluding byproducts, metals derived from the catalyst, and the like, was a polyoxypropylene monool (monool (2)) with a hydroxyl value of 11.2 mgKOH/g (molecular weight in terms of hydroxyl value: 5,000), an average number of hydroxyl groups of 1.03, and a moisture content of 120 ppm by mass. Also, as a byproduct, a polyoxypropylene glycol (polyol (2)), which used moisture in the system as the initiator, was obtained at 4% by mass in the product. The polyol (2) had a hydroxyl value of 11.2 mgKOH/g (molecular weight in terms of hydroxyl value: 10,000) and an average number of hydroxyl groups of 1.65 to 2.0. The proportion of EO units with respect to the entire mass of monool (2) was 24% by mass. In addition, the proportion of EO units with respect to the entire mass of polyol (2) was 24% by mass. In the obtained product, Zn and Co were contained at 8 ppm by mass and 2 ppm by mass, respectively.

### [Production Example 2-1: Production of First Monomer (1) and Second Monomer (1)]

In a reaction vessel equipped with a stirrer and a nitrogen inlet tube, 952.1 parts by mass of the product obtained in Production Example 1-2 and 47.9 parts by mass of 2-acryloyloxyethyl isocyanate (Karenz AOI, product name of Showa Denko K.K.) were charged, and in the presence of dioctyltin distearate (hereinafter, also referred to as DOTDS), they were allowed to react at 70°C for 3 hours, thereby obtaining a mixture of a first monomer (1) and a second monomer (1). Note that the product obtained in Production Example 1-2 contained 96% by mass of monool (2) and 4% by mass of polyol (2).

The obtained first monomer (1) had a number average molecular weight of 6,074.

The obtained second monomer (1) had a number average molecular weight of 15,500.

The proportion of the first monomer (1) with respect to the total of the first monomer (1) and the second monomer (1) was 96% by mass.

The amount of 2-acryloyloxyethyl isocyanate compounded with respect to the monool (2) was 100 in terms of index (NCO/OH ratio).

### [Production Example 2-2: Production of First Monomer (2) and Second Monomer (2)]

In a reaction vessel equipped with a stirrer and a nitrogen inlet tube, 954.4 parts by mass of the product obtained in Production Example 1-1 and 45.6 parts by mass of 1,1-(bisacryloyloxymethyl)ethyl isocyanate were charged, and in the presence of DOTDS, they were allowed to react at 70°C for 3 hours, thereby obtaining a mixture of a first monomer (2) and a second monomer (2). Note that the product obtained in Production Example 1-1 contained 93% by mass of monool (1) and 7% by mass of polyol (1).

The obtained first monomer (2) had a number average molecular weight of 7,450.

The obtained second monomer (2) had a number average molecular weight of 18,230.

The proportion of the first monomer (2) with respect to the total of the first monomer (2) and the second monomer (2) was 93% by mass.

The amount of 1,1-(bisacryloyloxymethyl)ethyl isocyanate compounded with respect to the monool (1) was 100 in terms of index (NCO/OH ratio).

### [Production Example 2-3: Production of First Monomer (3) and Second Monomer (3)]

In a reaction vessel equipped with a stirrer and a nitrogen inlet tube, 952.13 parts by mass of the product obtained in Production Example 1-2 and 47.9 parts by mass of 1,1-(bisacryloyloxymethyl)ethyl isocyanate were charged, and in the presence of DOTDS, they were allowed to react at 70°C for 3 hours, thereby obtaining a mixture of a first monomer (3) and a second monomer (3). Note that the product obtained in Production Example 1-2 contained 96% by mass of monool (2) and 4% by mass of polyol (2).

The obtained first monomer (3) had a number average molecular weight of 6,090.

The obtained second monomer (3) had a number average molecular weight of 15,520.

The proportion of the first monomer (3) with respect to the total of the first monomer (3) and the second monomer (3) was 96% by mass.

The amount of 1,1-(bisacryloyloxymethyl)ethyl isocyanate compounded with respect to the monool (2) was 100 in terms of index (NCO/OH ratio).

### [Production Example 3-1: Production of Second Monomer (4)]

In a reaction vessel equipped with a stirrer and a nitrogen inlet tube, 373.9 parts by mass of commercially available polyoxytetramethylene glycol (product name of Hodogaya Chemical Co., Ltd., PTG-2000SN, molecular weight in terms of hydroxyl value: 2,000) and 82.8 parts by mass of isophorone diisocyanate (product name of Sumika Covestro Urethane Co., Ltd., DESMODUR I) were charged such that the molar ratio of hydroxyl groups of PTG-2000SN and isocyanate groups of DESMODUR I was 1:2, and in the presence of DOTDS, they were allowed to react at 60°C for 4 hours. After confirming that the NCO content reached the theoretical value (3.42% by mass), 43.2 parts by mass of 2-hydroxyethyl acrylate and 0.05 parts by mass of 2,5-tert-butylhydroquinone as the polymerization inhibitor were added such that the number of hydroxyl groups of 2-hydroxyethyl acrylate was equal to one half the number of isocyanate groups of DESMODUR I, and they were allowed to react at 60°C for 4 hours, thereby obtaining a second monomer (4).

### [Examples 1 to 3]

To 100 parts by mass of the mixtures of the respective first monomers and second monomers obtained in Production Examples 2-1 to 2-3, 0.3 parts by mass of a photo radical polymerization initiator (phenylbis(2,4,6-trimethylbenzoyl)phosphine oxide, Irgacure 819, product name of BASF SE) was mixed, thereby preparing photocurable resin compositions. Note that the photocurable resin compositions prepared from the mixtures of Production Examples 2-1 to 2-3 will be referred to as the photocurable resin compositions obtained in Examples 1 to 3, respectively, in this order.

### <Measurement of Viscosity>

The viscosities of the photocurable resin compositions obtained in Examples 1 to 3 were measured at 25°C using an E type viscometer.

The measurement results are shown in the "Viscosity (25°C)" section of the "Composition" column in Table 1.

### <Measurement of Cure Shrinkage Factor>

Test specimens were formed by pouring the photocurable resin compositions obtained in Examples 1 to 3 into a silicone mold with a width of 5 mm × a length of 15 mm × a thickness of 2 mm, and curing them under the conditions of a Hg-Xe lamp, an illuminance of 100 m W/cm², and a cumulative light quantity of 3,000 mJ/cm² using a conveyor type UV irradiation machine (manufactured by Orc Manufacturing Co., Ltd.) in a nitrogen environment.

The reduction rates in the volumes of the test specimens (cure shrinkage factors) were calculated by dividing the difference between the volume of the silicone mold and the volumes of the obtained cured products (test specimens) by the volume of the silicone mold and multiplying the results by 100.

The measurement results are shown in the "Cure shrinkage factor" section of the "Cured product" column in Table 1.

A cure shrinkage factor of 6% or less is preferred because the fabrication accuracy is likely to be good.

### <Measurement of Storage Elastic Modulus>

Using the photocurable resin compositions obtained in Examples 1 to 3, the storage elastic moduli of test specimens formed by curing as mentioned below were measured in the temperature range of -80°C or higher and 130°C or lower using a dynamic viscoelasticity measurement apparatus (manufactured by Seiko Instruments Inc., EXSTAR 6100). The above test specimens were formed by pouring the photocurable resin composition of each Example into a silicone mold with a width of 5 mm × a length of 15 mm × a thickness of 2 mm, and curing it under the conditions of a Hg-Xe lamp, an illuminance of 100 mW/cm², and a cumulative light quantity of 3,000 mJ/cm² using a conveyor type UV irradiation machine (manufactured by Orc Manufacturing Co., Ltd.) in a nitrogen environment.

The obtained cured products (test specimens) were set in the dynamic viscoelasticity measurement apparatus and measured in tensile mode under the conditions of a strain of 1% and a temperature increasing rate of 3°C/min in the temperature region of -80°C or higher and 130°C or lower.

The measurement results are shown in the "Storage elastic modulus" section of the "Cured product" column in Table 1.

### <Evaluation of Three Dimensional Modelability>

The photocurable resin compositions obtained in Examples 1 to 3 were used to produce three dimensional fabricated objects using a stereolithographic 3D printer (manufactured by SparkMaker).

When the three-dimensional fabricated objects were produced using the 3D printer, whether the three-dimensional shapes of cured layers were collapsed and other details were visually checked, and they were evaluated as "Good" if they reproduced the original 3D CAD data.

The evaluation results are shown in the "Three-dimensional modelability" section of the "Cured product" column in Table 1.

**[Table 1]**

| | | | Example 1 | Example 2 | Example 3 |
|---|---|---|---|---|---|
| Composition | Viscosity (25°C) | [Pa·s] | 1 | 0.9 | 1.1 |
| Cured product | Cure shrinkage factor | [%] | 0.3 | 1.3 | 1.2 |
| | Storage elastic modulus | [kPa] | 11 | 107 | 67 |
| | Three dimensional modelability | | Good | Good | Good |

### [Examples 4 to 10]

Photocurable resin compositions of Examples 4 to 10 were prepared with the compounding ratios described in Table 2, by using: the mixture of the first monomer (1) and the second monomer (1) obtained in Production Example 2-1; the second monomer (4) obtained in Production Example 3-1; commercially available polyfunctional urethane acrylate (CN9028, product name of Sartomer; a reaction product formed by using polyoxypropylene glycol, isophorone diisocyanate, and 2-hydroxyethyl acrylate as the raw materials and allowing them to react such that the hydroxyl groups and isocyanate groups contained in the above raw materials are equimolar. Hereinafter, also referred to as a second monomer (5)); isoboronyl methacrylate (hereinafter, also referred to as IBMA); isoboronyl acrylate (hereinafter, also referred to as IBA); acryloylmorpholine (hereinafter, also referred to as ACMO); trimethylolpropane triacrylate (hereinafter, also referred to as TMPTA); 1H,1H,5H-octafluoropentyl acrylate (Viscoat 8F, product name of Osaka Organic Chemical Industry Ltd.); 2-hydroxy-2-methylpropiophenone (Darocur 1173, product name of BASF SE), which is a photo radical polymerization initiator; and Irgacure 819, which is a photo radical polymerization initiator. In the "Composition" column in Table 2, the proportion (% by mass) of the first monomer with respect to the total mass of the first monomer and the second monomer is shown (shown as "Proportion of first monomer" in the table).

### <Measurement of Viscosity, Cure Shrinkage Factor, and Storage Elastic Modulus>

The viscosities of the photocurable resin compositions obtained in Examples 4 to 10, and the cure shrinkage factors and storage elastic moduli of the cured products of the photocurable resin compositions obtained in Examples 4 to 10 were measured in the same manner as in Examples 1 to 3.

The measurement results are shown in the "Viscosity (25°C)" section of the "Composition" column, and the "Cure shrinkage factor" and "Storage elastic modulus" sections of the "Cured product" column in Table 2.

### <Measurement of Breaking Strength and Elongation at Break>

The photocurable resin compositions obtained in Examples 4 to 10 were molded into the shape of No. 3 dumbbell piece as specified in JIS K7312 using a stereolithographic 3D printer (ML-100 manufactured by Mutoh Industries Ltd.). The obtained molded products were used to measure the tensile properties at a tensile speed of 300 mm/min using Tensilon RTG-1310 (product name of A&D Company, Limited), and their breaking strengths and elongations at break were measured.

The evaluation results are shown in the "Breaking strength" and "Elongation at break" sections of the "Cured product" column in Table 2.

A breaking strength of 0.3 MPa or more is preferred because it is a practically sufficient strength. An elongation at break of 50% or more is preferred because the durability is likely to be good.

### <Evaluation of Three Dimensional Modelability>

The photocurable resin compositions obtained in Examples 4 to 10 were used to produce three dimensional fabricated objects using a stereolithographic 3D printer (ML-100 manufactured by Mutoh Industries Ltd.).

When the three dimensional fabricated objects were produced using the 3D printer, whether the three dimensional shapes of cured layers were collapsed and other details were visually checked, and they were evaluated as "Good" if they reproduced the original 3D CAD data, "Fair" if they reproduced the original data for the part of about 80% or more of the volume of the cured layers, and "Poor" if they did not reproduce the original data.

The evaluation results are shown in the "Three dimensional modelability" section of the "Cured product" column in Table 2.

**[Table 2]**

| | | | | Example 4 | Example 5 | Example 6 | Example 7 | Example 8 | Example 9 | Example 10 |
|---|---|---|---|---|---|---|---|---|---|---|
| Composition | Compounding ratio [parts by mass] | Mixture of monomers obtained in Production Example 2-1 | | 66.40 | 66.77 | 66.73 | 66.40 | 42.2 | 27.9 | 19.9 |
| | | Second monomer (4) | | - | - | - | 10.03 | - | - | - |
| | | Second monomer (5) | | 10.03 | 9.99 | 10.01 | - | 34.54 | 48.84 | 56.53 |
| | | IBMA | | - | 20.07 | - | - | - | - | - |
| | | IBA | | - | - | 20.1 | - | 20.1 | 20.1 | 20.1 |
| | | ACMO | | 20.02 | - | - | 20.02 | - | - | - |
| | | TMPTA | | 2.51 | 2.60 | 2.60 | 2.51 | 2.60 | 2.60 | 2.60 |
| | | Viscoat 8F | | 0.51 | - | - | 0.51 | - | - | - |
| | | Darocur-1173 | | 0.14 | 0.14 | 0.13 | 0.14 | 0.13 | 0.13 | 0.13 |
| | | Irgacure819 | | 0.39 | 0.43 | 0.43 | 0.39 | 0.43 | 0.43 | 0.43 |
| | | Total | | 100.00 | 100.00 | 100.00 | 100.00 | 100.00 | 100.00 | 100.00 |
| | Proportion of first monomer | | | 83% | 84% | 83% | 83% | 53% | 35% | 25% |
| | Viscosity (25°C) | | [Pa·s] | 3.0 | 2.4 | 2.6 | 3.8 | 26 | 35 | 41 |
| Cured product | Cure shrinkage factor | | [%] | 3 | 3 | 3 | 2 | 3 | 3 | 3 |
| | Storage elastic modulus | | [MPa] | 10.2 | 3.6 | 0.2 | 11.1 | 0.4 | 0.5 | 0.6 |
| | Breaking strength | | [MPa] | 2.52 | 2.56 | 0.49 | 3.40 | 0.6 | 1.0 | 1.2 |
| | Elongation at break | | [%] | 177 | 128 | 108 | 133 | 111 | 50 | 38 |
| | Three dimensional modelability | | | Good | Good | Good | Good | Fair | Poor | Poor |

### Industrial Applicability

The resin composition of the present invention demonstrates its usefulness in fabricating shape confirmation models of precision components and the like, functional test models, and final products using its high heat resistance and toughness. More specifically, it can be effectively used for a variety of applications such as models, mother molds, and processing of, for example, artificial organs, organ models, precision components, electrical and electronic components, furniture, building structures, automotive components, various containers, and castings.

Note that the entire contents of the specification, claims, and abstract of Japanese Patent Application No. 2019-221477, filed on December 6, 2019, are hereby cited and incorporated as disclosure in the specification of the present invention.

## Claims

1. A resin composition comprising a first monomer and a second monomer, wherein
the first monomer is at least one monomer selected from the group consisting of reaction products of (i), (ii), and (iii) below,
the second monomer is at least one monomer selected from the group consisting of reaction products of (iv) and (v) below, and
the proportion of the first monomer with respect to the total mass of the first monomer and the second monomer is 50 to 98% by mass:
(i) an equimolar reaction product of a polyether monool and a compound having a (meth)acryloyloxy group, where the compound having a (meth)acryloyloxy group is a compound having one isocyanate group in a molecule and having one or two (meth)acryloyloxy groups in a molecule;
(ii) an equimolar reaction product of a polyether monool, a diisocyanate, and a compound having a (meth)acryloyloxy group, where the compound having a (meth)acryloyloxy group is a compound having one group that reacts with an isocyanate group in a molecule and having one or two (meth)acryloyloxy groups in a molecule;
(iii) an equimolar reaction product of a polyether polyol and a compound having a (meth)acryloyloxy group, where the compound having a (meth)acryloyloxy group is a compound having one isocyanate group in a molecule and having one or two (meth)acryloyloxy groups in a molecule;
(iv) a reaction product of a polyether polyol and a compound having a (meth)acryloyloxy group, where the compound having a (meth)acryloyloxy group is a compound having one isocyanate group in a molecule and having one or two (meth)acryloyloxy groups in a molecule, and the hydroxyl group in the polyether polyol and the compound having a (meth)acryloyloxy group are equimolar; and
(v) a reaction product of a polyol (A), a polyisocyanate, and a compound having a (meth)acryloyloxy group, where the polyol (A) is at least one or more selected from the group consisting of a polyether polyol, a polyester polyol, a poly(meth)acrylic polyol, a polycarbonate polyol, a castor oil based polyol, and a polyolefin polyol, the compound having a (meth)acryloyloxy group is a compound having one group that reacts with an isocyanate group in a molecule and having one or two (meth)acryloyloxy groups in a molecule, and the total number of moles of the hydroxyl group of the polyol (A) and the group that reacts with an isocyanate group of the compound having a (meth)acryloyloxy group is equal to the number of moles of the isocyanate group of the polyisocyanate.

2. The resin composition according to claim 1, wherein the first monomer comprises at least the reaction product of (i).

3. The resin composition according to claim 1, wherein the first monomer is at least one selected from the group consisting of a compound represented by formula (1), a compound represented by formula (2), and a compound represented by formula (3): 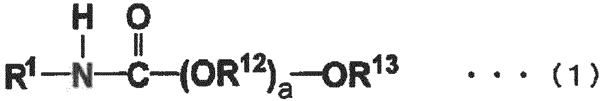 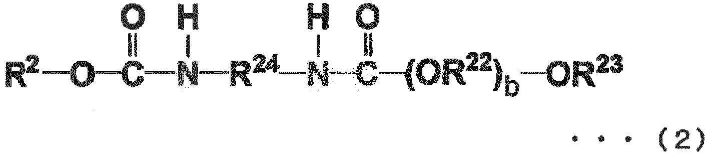 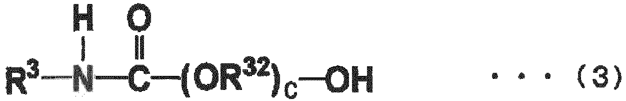
wherein, in formula (1), R¹ is a monovalent organic group having one or two (meth)acryloyloxy groups, R¹² is an alkylene group having 2 to 8 carbon atoms, R¹³ is an alkyl group having 1 to 20 carbon atoms, and a is an integer of 20 to 600;
wherein, in formula (2), R² is a monovalent organic group having one or two (meth)acryloyloxy groups, R²² is an alkylene group having 2 to 8 carbon atoms, R²³ is an alkyl group having 1 to 20 carbon atoms, R²⁴ is a divalent group formed by removing two isocyanate groups from a diisocyanate, and b is an integer of 20 to 600; and
wherein, in formula (3), R³ is a monovalent organic group having one or two (meth)acryloyloxy groups, R³² is an alkylene group having 2 to 8 carbon atoms, and c is an integer of 20 to 600.

4. The resin composition according to claim 3, wherein the first monomer is a compound represented by the above formula (1).

5. The resin composition according to any one of claims 1 to 4, wherein the second monomer is at least one selected from the group consisting of a compound represented by formula (4) and a compound represented by formula (5): 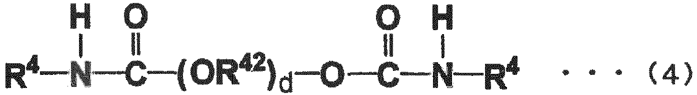 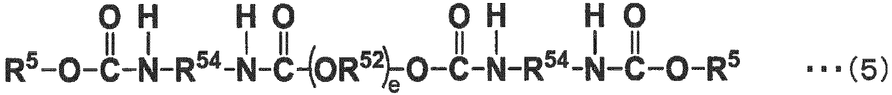
wherein, in formula (4), R⁴ is a monovalent organic group having one or two (meth)acryloyloxy groups, R⁴² is an alkylene group having 2 to 8 carbon atoms, and d is an integer of 20 to 600; and
wherein, in formula (5), R⁵ is a monovalent organic group having one or two (meth)acryloyloxy groups, R⁵² is an alkylene group having 2 to 8 carbon atoms, R⁵⁴ is a divalent group formed by removing two isocyanate groups from a diisocyanate, and e is an integer of 20 to 600.

6. The resin composition according to any one of claims 1 to 5, having a viscosity at 25°C of 30 Pa·s or less.

7. The resin composition according to any one of claims 1 to 6, having a glass transition temperature of -75 to -50°C.

8. The resin composition according to any one of claims 1 to 7, wherein the first monomer has a number average molecular weight of 3,000 to 30,000.

9. The resin composition according to any one of claims 1 to 8, wherein the second monomer has a number average molecular weight of 6,000 to 60,000.

10. The resin composition according to any one of claims 1 to 9, further comprising a third monomer having a (meth)acryloyloxy group.

11. The resin composition according to any one of claims 1 to 10, being a fabricating material for 3D printers.

12. The resin composition according to any one of claims 1 to 11, further comprising a photoradical polymerization initiator.

13. The resin composition according to claim 12, being a photocurable resin composition for 3D printers.

14. A resin cured product obtained by irradiating the resin composition according to claim 13 with light.

15. The resin cured product according to claim 14, being an artificial organ or an organ model.
